# EUROPEAN PATENT APPLICATION

(11) **EP 4 560 501 A1**
(43) Date of publication of application: **28.05.2025**
(21) Application number: 23211169.0
(22) Date of filing: 21.11.2023
(51) Int. Cl.: G06F 21/33, G06F 21/44, H04L 9/32, H04L 9/40

(54) **SECURE PROVISIONING OF TRUST**

(71) Applicant: Siemens Aktiengesellschaft, 80333 München (DE)
(72) Inventor: von Oheimb, David, 85551 Kirchheim bei München (DE)
(74) Representative: Siemens Patent Attorneys

(57) **Abstract**

System (10), trust provider unit and method for secure trust provisioning, comprising following steps:
by the trust provider unit (11),
- providing (S1) in an authentic way at least one initial trust anchor (20) to at least one entity (13) before the at least one entity (13) is placed in a security domain (16),
- receiving (S2) in an authentic way from a trust server (12) of the security domain (16) at least one domain trust anchor (21), which is trusted by entities (14) belonging to the security domain,
- generating (S3) a voucher comprising the at least one domain trust anchor (21) and secured such that the authenticity and integrity of the voucher is verifiable using one of the initial trust anchors (20), and
- transferring (S4) the voucher to each of the at least one entity (13),

by each of the at least one entity (13),
- verifying (S5) the received voucher using at least one of the provided initial trust anchors (20),
- if the verification is successful, using (S6) at least one domain trust anchor (21) to verify credentials of other entities or data from other entities.

## Description

The present disclosure relates to a computer-implemented method for secure provisioning of domain trust anchors to entities, and a system and a trust provider unit configured to perform the computer-implemented method.

Nowadays, devices are increasingly applied in private and industrial environments. Devices communicate with each other or with controllers in public or private communication networks. When a device is brought into a new operational environment, it needs to obtain one or more domain-specific trust anchors in a secure way. Trust anchors are needed to be able to authenticate other entities and thus securely communicate with them.

In cryptographic systems with hierarchical structure, the trust anchor is an authoritative entity for which trust is assumed and not derived. The authoritative entity is represented by a credential assigned to it. In a public-key infrastructure architecture, a public-key certificate of a trusted certification authority serves as a trust anchor from which trust in whole chains of certificates can be derived. The trust anchor must be in the possession of the relying party beforehand to make certificate path validation possible, which is used to authenticate other entities.

Most operating systems or web browsers provide a built-in list of typically self-signed root certificates to act as trust anchors for applications. The end-user of an operating system or web browser is implicitly trusting in the correct configuration and operation of that software, which in turn delegates trust for certain cryptographic operations to the certificate authorities responsible for the root certificates.

Commonly, the trust anchor is in the form of an X.509 public-key certificate. Yet the trust anchor may also be a bare public key or any other cryptographic credential that can be trusted under certain circumstances for certain purposes, such as authenticating other parties or for cryptographically verifying data received from them.

Often, devices or services of a manufacturer are deployed in a variety of different operational domains. The manufacturer of the device or developer of the service does not know into which operational environment the device or service will be used in, and which trust anchors shall be trusted in this operational environment. Thus, a pre-installation of all potentially needed trust anchors is not feasible.

Known solutions are for instance a trust on first use (TOFU) approach or a sophisticated solution like "Bootstrapping Remote Secure Key Infrastructure", BRSKI, standardized in RFC 8995 of the Internet Engineering Task (IETF). They do not provide strong security or require new entities and complex message flow for providing the trust anchor.

In the "trust on first use" approach, a device that is new in an operational domain simply trusts whatever trust anchor it learns first and pins itself to this trust anchor for validating any further credentials by storing it in a trust store of the device.

According to the BRSKI RFC 8995 specification the device is provided with an initial trust anchor such that it trusts its own manufacturer. When a device is new in an operational domain, it requests a first domain-specific trust anchor via an intermediary, a so-called domain registrar, from a Manufacturer Authorized Signing Authority, MASA, service of its manufacturer. The MASA provides, in an on-line or offline manner, via the registrar a BRSKI voucher, a digitally signed statement that includes the device identity and a domain trust anchor. The device can verify this BRSKI voucher using the initial trust anchor. In this way trust in the new domain is handed over by the manufacturer via the registrar to a specific device, upon its request via the domain registrar.

Therefore, it is the object of the present application to provide a simple but still secure approach to provide trust anchors specific for the operational environment to devices.

This object is solved by the features of the independent claims. The dependent claims contain further developments of the invention.

A first aspect concerns computer-implemented method for secure trust provisioning, comprising following steps:
by the trust provider unit,
   - providing in an authentic way at least one initial trust anchor to at least one entity before the at least one entity is placed in a security domain,
   - receiving in an authentic way from a trust server of the security domain at least one domain trust anchor, which is trusted by entities belonging to the security domain,
   - generating a voucher comprising the at least one domain trust anchor and secured such that the authenticity and integrity of the voucher is verifiable using one of the initial trust anchors, and
   - transferring the voucher to each of the at least one entity,
by each of the at least one entity,
   - verifying the received voucher using one of the provided initial trust anchors,
   - if the verification is successful, using the at least one domain trust anchor to verify credentials of other entities or data from other entities.

The solution is much more secure than the "trust on first use" approach because the entity will only verify and accept trust anchors provided by domains that the trust service provider has explicitly stated to be trustworthy. There is no window of opportunity for a man-in-the-middle because the voucher is secured such that the authenticity and integrity of the voucher is verifiable using one of the initial trust anchors. For instance, the voucher can be digitally signed by a private key of the trust provider unit which can be validated using one of the initial trust anchors containing a corresponding public key certificate. The security domain is, e.g., an operational environment comprising a number of devices and entities.

With respect to the BRSKI approach, the solution is much simpler as no sophisticated services are needed such as MASA and registrar, via which an entity must request the BRSKI voucher. It is also more general in many aspects:
No restrictions are made when and how the issuance of the vouchers is triggered.

The manufacturer or trust provider does not need to produce and transfer a voucher per each entity.

No standardized format is needed for the enhanced voucher because the entities need to interface just with their trust provider, which is a service of their own manufacturer.

The voucher allows inclusion of any constraints.

The transfer of the voucher can be performed by any means at any time, also without direct involvement of other parties in the domain.

Multiple initial trust anchors may be used.

The form of the trust anchors is not limited to X.509 certificates.

In a further embodiment the at least one initial trust anchor is placed in each of the at least one entity during manufacturing of the entity.

This ensures that every entity contains the initial trust anchor. The entity can verify the voucher at any time after its production. This may be just a few seconds or several years after production.

In a further embodiment the at least one initial trust anchor and/or the at least one domain trust anchor is a public-key certificate or a verifiable credential or a symmetric key or a common secret.

The inventive approach is thus flexible with respect to the applied type of cryptographical method, e.g., a symmetric or asymmetric cryptography.

In a further embodiment the voucher contains constraints with respect to the usage of the at least one domain trust anchor. Especially, the constraints concern the purpose and/or the time of usage of the at least one domain trust anchor and/or the entities allowed to use the at least one domain trust anchor.

Thus, the method provides flexibility with respect to which domain trust anchor shall be used for which purpose, at which time, and for which entity or type of entity.

In a further embodiment the domain trust anchor is represented by an identifier that uniquely refers to the domain trust anchor.

The identifier, e.g., a secure hash value of the domain trust anchor, is shorter than the domain trust anchor itself and requires less resources for transmission and/or storage of the voucher.

The first and second secured communication ensure the provisioning of the initial trust anchors and the receipt of the domain trust anchors in the trust provider unit in an authentic way. The second secured communication is preferably cryptographically secured. The communication for transferring the voucher does not require a secure communication as the voucher itself is already cryptographically secured and is validated by the entity using the initial trust anchor. This reduces processing time and transmission bandwidth.

In a further embodiment the trust provider unit receives the initial trust anchor from the manufacturer of the entity.

Thus, the trust provider unit does not generate the initial trust anchor by itself. The manufacturer of the entity can provide, or even generate itself, the initial trust anchor. This reduces the processing power of the trust provider unit and/or reduces implementation of specific trust modules in the trust provider unit.

In a further embodiment the entity can be a device, a service, or an application.

Thus, the method can be applied not only to devices, i.e., a specific device, a computer, specific processing HW, but also SW-implemented services which provide a continuously running feature of the device or an application which is started and temporarily run on demand.

A second aspect concerns a system for secure trust provisioning, comprising a trust server of a security domain, a trust provider unit configured to
- provide in an authentic way at least one initial trust anchor to at least one entity before the at least one entity is placed in a security domain,
- receive in an authentic way from a trust server of the security domain at least one domain trust anchor, which is trusted by entities belonging to the security domain,
- generate a voucher comprising the at least one domain trust anchor and secured such that the authenticity and integrity of the voucher is verifiable using one of the initial trust anchors, and
- transfer the voucher to each of the at least one entity, and
at least one entity, each of them configured to
- verify the received voucher using one of the provided initial trust anchors,
- if the verification is successful, use the at least one domain trust anchor to verify credentials of other entities or data from other entities.

The system enables a simple and secure provisioning of domain trust anchors to entities when placed in a security domain and before they are needed to verify credentials of other entities.

In an embodiment of the trust provider unit is controlled by the manufacturer of the at least one entity.

The trust provider unit can be controlled, e.g., by being an integral part of the manufacturer.

A third aspect concerns a trust provider unit for secure provisioning of domain trust anchors to entities, comprising:
- an initialisation unit configured to provide in an authentic way at least one initial trust anchor to at least one entity before the at least one entity is placed in a security domain,
- a domain interface configured to receive in an authentic way from a trust server of a security domain at least one domain trust anchor, which is trusted by entities belonging to the security domain,
- a processing unit configured to generate a voucher comprising the at least one domain trust anchor and secured such that the authenticity and integrity of the voucher is verifiable using one of the initial trust anchors, and
- an entity interface configured to transfer the voucher to each of the at least one entity.

The trust provider unit enables a simple and secure provisioning of at least one domain trust anchor when the entity is brought into a security domain of, e.g., a new operational environment.

A fourth aspect concerns a computer program product directly loadable into the internal memory of at least two digital computers, comprising software code portions for performing the steps as described before, when said product is run on said digital computers.

The invention will be explained in more detail by reference to accompanying figures. Similar objects will be marked by the same reference signs.
- Figure 1: schematically illustrates an application environment of an embodiment of the inventive system,
- Figure 2: schematically illustrates an embodiment of the inventive method, and
- Figure 3: schematically illustrates an embodiment of the service provider unit.

It is noted that in the following detailed description of embodiments, the accompanying drawings are only schematic, and the illustrated elements are not necessarily shown to scale. Rather, the drawings are intended to illustrate functional units of components and the co-operation of these functional units. Here, it is to be understood that any connection or coupling of functional units, devices, components or other physical or functional elements could also be implemented by an indirect connection or coupling, e.g., via one or more intermediate elements. A connection or a coupling of elements or components or devices can for example be implemented by a wire-based, a wireless connection and/or a combination of a wire-based and a wireless connection or any other means.

Functional units can be implemented by dedicated hardware, e.g., processor, by firmware or by software, and/or by a combination of dedicated hardware and firmware and software. It is further noted that each functional unit described for an apparatus can perform a functional step of the related method and vice versa.

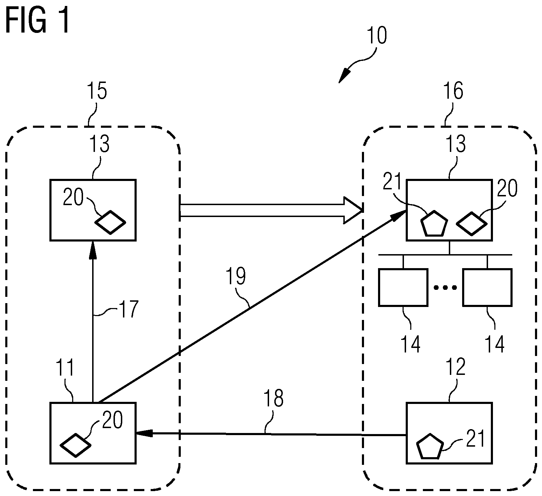

Figure 1 shows a scenario in which at least one entity, for simplicity only one entity 13 is depicted, shall be newly brought into a security domain 16, indicated by a contour of an arrow. Entity 13 needs to obtain in a secure way one or more domain trust anchors 21 which are trusted by entities belonging to the security domain 16, here entities 14. Any other entity independent whether it belongs to the security domain 16 or not, can be authenticated if it provides a credential that can be verified by the domain trust anchor 21. The entity 13 is a device or a service or an application. The device is for instance an IoT device or any other device which communicates with any other entity. The service is meant to be a software-implemented service, which is preferably continuously run on a device. The application is meant to be a software-implemented service which is started on demand and temporarily run on a device. The device is any hardware comprising at least one processor to perform the service or application.

System 10 provides the at least one domain-specific trust anchor 21 to the entity 13. The system 10 comprises a trust provider unit 11 and a trust server 12. Trust server 12 is preferably part of the security domain 16. The trust provider unit 11 is configured to provide at least one initial trust anchor 20 in an authentic way to entity 13 before entity 13 is integrated in the security domain 16. In a preferred embodiment the trust provider unit 11 is controlled by a manufacturer of the at least one entity 13. In one embodiment, the trust provider unit 11 is implemented in two separate sub-components, one for providing the initial trust anchors to the entity 13, the other one for providing the voucher to the entity 13.

Further the trust provider unit 11 is communicatively connected with entity 13, see communication connections 17, 19. The trust provider unit 11 is communicatively connected with the trust server of the security domain 12, see communication connections 18.

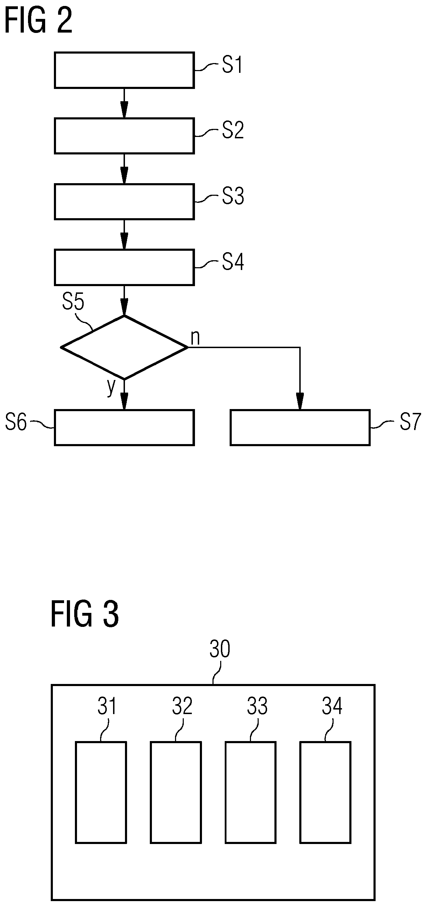

The provision of a domain trust anchor to an entity which shall be integrated into a security domain is illustrated in Fig. 2 and described in more detail below referring to the system 10 as shown in Fig.l.

In a first step S1 the trust provider unit 11 provides at least one initial trust anchor 20 in an authentic way to at least one entity 13 before the at least one entity 13 is placed into security domain 16. Preferably, the at least one initial trust anchor 20 is placed in each of the at least one entity 13 during manufacturing of the at least one entity 13. The provision of the initial trust anchor 20 can be assumed to be performed in a secure way if the initial trust anchor 20 is implemented into the entity 13 in a secure manufacturing environment. In an embodiment, the at least one initial trust anchor 20 is provided via a first secured communication 17 from the trust provider unit 11 to at least one entity 13. This first secured communication 17 is used when the trust provider unit 11 is not located inside the manufacturing domain 15. In an embodiment the trust provider unit 11 receives the at least one initial trust anchor 20 from the manufacturer of the at least one entity 13.

In step S2 the trust provider unit 11 receives at least one domain trust anchor 21 in an authentic way from a trust server of the security domain 16. Step S2 can be performed also before step S1. The at least one domain trust anchor 21 shall be trusted by entities 14 belonging to the security domain. To provide an authentic way, the at least one domain trust anchor 21 is received by the trust provider unit 11 via a second cryptographically secured communication from the trust server 12 of the security domain 16.

In step S3 the trust provider unit 11 generates a voucher comprising the at least one domain trust anchor 21 and secures the voucher such that the authenticity and integrity of the voucher is verifiable using one of the initial trust anchors 20. The voucher is transferred to each of the at least one entity 13 by the trust provider unit 11, see step S4. In one embodiment the voucher is transferred via a communication 19 to the at least one entity 13.

Only the initial communication between the trust provider unit 11 and the at least one entity 13, see first secure communication 17, and the initial communication between the trust provider unit 11 and the trust server 12 of the security domain 16, see second secure communication 18, must be secure. The communication 19 is not required to be secured because the voucher itself is already cryptographically secured by a credential which is verifiable using one of the initial trust anchors 20, which is available in the at least one entity 13 in step S1.

The voucher can be generated in the trust provider unit 11 at any time after the domain trust anchor 21 has been received by the trust provider unit 11. The voucher can be transferred to every entity 13 at any time.

Each of the at least one entity 13 verifies any time later the received voucher using one of the provided initial trust anchors, see step S5. If the verification is successful, each of the at least one entity 13 uses the at least one domain trust anchor 21 to verify credentials of other entities or data from other entities, see step S6. In an embodiment the domain trust anchor 21 is stored in any of the at least one entity 13 for future use.

If the voucher cannot be verified by any of the at least one initial trust anchor 20, the voucher is not accepted and the at least one domain trust anchor 21 is not used by the entity 13. In consequence the entity 13 is not able to authenticate other entities based on the at least one domain trust anchor 21.

In an embodiment the at least one initial trust anchor 20 and/or the at least one domain trust anchor 21 is a public-key certificate or a verifiable credential or a symmetric key or a common secret.

In an embodiment the voucher contains constraints with respect to the usage of the at least one domain trust anchor 21. The constraints may concern the purpose and/or the time of usage of the at least one domain trust anchor 21 and/or the entities 13 which are allowed to use the at least one domain trust anchor 21. The entities which are allowed to use the domain trust anchor 21 may be specified by a type of entity, single or groups of entities, which may be specified, e.g., by an identifier of the single entity or group of entities. In an embodiment the domain trust anchor 21 is represented by a unique identifier, which uniquely refers to the domain trust anchor 21. The identifier of the domain trust anchor 21 can be derived by a secure hash function from the domain trust anchor 21. In an embodiment, the voucher is signed by a digital signature which can be verified using the initial trust anchor 20.

No restrictions are required with respect to when and how the generation, i.e., an issuance of the voucher is triggered. It may be done as early as when an operator of the security domain gets into contact with the trust provider unit, e.g., the manufacturer of the entity. It may also be done as late as on immediate demand by the entity that is about to get bootstrapped into the security domain of the operator. Also, the generation and transfer of the voucher can be temporarily separated. For instance, the voucher is generated instantly after the trust provider unit 11 receives the domain trust anchor from the trust server of the security domain 16 but transfers it to the entity at a later point in time, e.g., requested by the entity or triggered otherwise.

Moreover, no restrictions need to be made here how the enhanced voucher is delivered. The voucher may be transferred online, e.g., via the mentioned communication connection 19, and/or offline, e.g., via a data storage medium like a USB stick or similar. The voucher may be transferred directly between the trust provider unit 11 and an entity 13 or may involve services of the operator of the security domain 16 or any other parties.

No sophisticated services such as a BRSKI MASA and domain registrars are required.

Moreover, no standardized format is needed for the enhanced voucher because the entities 13 need to interface just with their trust provider unit 11, which is for instance a service of manufacturer of the entities 13.

Each receiving entity 13 can verify the voucher using one of the at least one initial trust anchor 20 that it initially obtained from the trust provider unit 11. In this way new trust, such as, in a new security domain operator, is derived directly and securely from existing trust, such as, in the device manufacturer. This new trust may optionally be confined to a certain set of entities, e.g., by specifying a device type, and may contain further restrictions, such as a set of purposes or times for which the domain trust anchors are recommended or allowed to be used.

Further, the invention concerns a computer program product directly loadable into the internal memory of at least one digital computer, comprising software code portions for performing the steps as described above when said product is run on said at least one digital computer. The program product comprises a non-transitory computer readable medium that stores computer executable code that when executed on a processor performs the described method.

Figure 3 shows a trust provider unit 30 in more detail. The trust provider unit 30 comprises an initialisation unit 31, a domain interface 32, a voucher generation unit 33, and an entity interface 34.

The initialisation unit 31 is configured to provide in an authentic way at least one initial trust anchor 20 to at least one entity 13 before the at least one entity 13 is placed in a security domain 16. The domain interface 32 is configured to receive in an authentic way from a trust server 12 of a security domain 16 at least one domain trust anchor 21, which shall be trusted by entities 14 belonging to the security domain 16. The voucher generation unit 33 is configured to generate a voucher comprising the at least one domain trust anchor 21 and to secure the voucher such that the authenticity and integrity of the voucher is verifiable using one of the initial trust anchors 20. The entity interface 34 is configured to transfer the voucher to each of the at least one entity 13.

In an embodiment the trust provider unit 30 is implemented in two locally separated components, a first component comprising the initialisation unit 31, a second component comprising the domain interface 32, the voucher generation unit 33, and the entity interface 34. The first component is preferably located in the manufacturing environment of the manufacturing domain 15.

The described solution combines security, simplicity, generality, and acceptability.

In comparison to the known approaches the solution is much more secure than the "trust on first use" approach because the entity will only trust security domains that its manufacturer has explicitly stated to be trustworthy. There is no window of opportunity for a man-in-the-middle attack.

The solution is much simpler and is in several ways more general than BRSKI. No full MASA service and no standardized registrar is needed. The manufacturer does not need to produce and transfer a voucher per each entity. The transfer of the described voucher can be performed by any means at any time, also without direct involvement of components in the new security domain. The format of the voucher does not need to be standardized. It allows inclusion of any constraints. It does not require the use of certificates nor a digital signature but just verifiability using any form of trust anchor.

The solution does not allow to directly, via chain validation, validate certificates security domain-based on the initial trust anchor or any other Certificate Authority certificate of a manufacturer public key infrastructure (PKI), which avoids liability issues. Moreover, the scope of a voucher may be limited to a certain set of entities, further reducing the risk of misuse, even potentially unintended. It is also more general because it does not require the use of certificates but also works with more general forms of trust anchors.

It is to be understood that the above description of examples is intended to be illustrative and that the illustrated components are susceptible to various modifications. For example, the illustrated concepts could be applied for different technical systems and especially for different subtypes of the respective technical system with only minor adaptions.

## Claims

1. Computer-implemented method for secure trust provisioning, comprising following steps:
by the trust provider unit (11),
- providing (S1) in an authentic way at least one initial trust anchor (20) to at least one entity (13) before the at least one entity (13) is placed in a security domain (16),
- receiving (S2) in an authentic way from a trust server (12) of the security domain (16) at least one domain trust anchor (21), which is intended to be trusted by entities (14) belonging to the security domain,
- generating (S3) a voucher comprising the at least one domain trust anchor (21) and secured such that the authenticity and integrity of the voucher is verifiable using one of the initial trust anchors (20), and
- transferring (S4) the voucher to each of the at least one entity (13),
by each of the at least one entity (13),
- verifying (S5) the received voucher using at least one of the provided initial trust anchors (20),
- if the verification is successful, using (S6) at least one domain trust anchor (21) to verify credentials of other entities or data from other entities.

2. Computer-implemented method according to claim 1, wherein the at least one initial trust anchor (20) is placed in each of the at least one entity (13) during manufacturing or development of the entity (13).

3. Computer-implemented method according to any of the preceding claims, wherein the at least one initial trust anchor (20) and/or the at least one domain trust anchor (21) is a public-key certificate or a verifiable credential or a symmetric key or a secret.

4. Computer-implemented method according to any of the preceding claims, wherein the voucher contains constraints with respect to the usage of the at least one domain trust anchor (21).

5. Computer-implemented method according to claim 4, wherein the constraints concern the purpose and/or the time of usage of the at least one domain trust anchor (21) and/or the entities (13) which are allowed to use the at least one domain trust anchor (21).

6. Computer-implemented method according to any of the preceding claims, wherein the domain trust anchor (21) is represented by a unique identifier, which uniquely refers to the domain trust anchor (21).

7. Computer-implemented method according to any of the preceding claims, wherein the at least one initial trust anchor (20) is provided via a first secured communication (17) from the trust provider unit (11) to at least one entity (13) and the at least one domain trust anchor (21) is received via a second secured communication (18) by the trust provider unit (11) from the trust server (12) of the security domain (16).

8. Computer-implemented method according to claim 7, wherein the first secured communication (17) and/or the second secured communication (18) is a cryptographically secured communication.

9. Computer-implemented method according to any of the preceding claims, wherein, the trust provider unit (11) receives the initial trust anchor (20) from the manufacturer of the entity (13).

10. Computer-implemented method according to any of the preceding claims, wherein the entity (13) can be a device, a service, or an application.

11. System (10) for secure trust provisioning, comprising a trust provider unit (11) configured to
- provide in an authentic way at least one initial trust anchor (20) to at least one entity (13) before the at least one entity (13) is placed in a security domain (16),
- receive in an authentic way from a trust server (12) of the security domain (16) at least one domain trust anchor (21), which is intended to be trusted by entities (14) belonging to the security domain (16),
- generate a voucher comprising the at least one domain trust anchor (21) and secured such that the authenticity and integrity of the voucher is verifiable using one of the initial trust anchors (20), and
- transfer the voucher to each of the at least one entity (13), and
at least one entity (13), each of them configured to
- verify the received voucher using at least one of the provided initial trust anchors (20),
- if the verification is successful, use at least one domain trust anchor (21) to verify credentials of other entities or data from other entities.

12. System according to claim 11, wherein the trust provider unit (11) is controlled by a manufacturer of the at least one entity (13).

13. Trust provider unit (30) for secure trust provisioning, comprising
- an initialisation unit (31) configured to provide in an authentic way at least one initial trust anchor (20) to at least one entity (13) before the at least one entity (13) is placed in a security domain (16),
- a domain interface (32) configured to receive in an authentic way from a trust server (12) of a security domain (16) at least one domain trust anchor (21), which is trusted by entities belonging to the security domain (16),
- a voucher generation unit (33) configured to generate a voucher comprising the at least one domain trust anchor (21) and secured such that the authenticity and integrity of the voucher is verifiable using one of the initial trust anchors (20), and
- an entity interface (34) configured to transfer the voucher to each of the at least one entity (13).

14. A computer program product directly loadable into the internal memory of at least one digital computer, comprising software code portions for performing the steps of claims 1-10 when said product is run on said at least one digital computer.
